# EUROPÄISCHE PATENTSCHRIFT

(11) **EP 0 853 538 B1**
(45) Veröffentlichungstag und Bekanntmachung des Hinweises auf die Patenterteilung: **19.01.2000**
(21) Anmeldenummer: 96944557.6
(22) Anmeldetag: 17.09.1996
(51) Int. Cl.: B29C 45/00

(54) **SPRITZGIESSMASCHINE ZUR VERARBEITUNG PLASTIFIZIERBARER MASSEN**
INJECTION MOULDING MACHINE FOR PROCESSING PLASTIFIABLE MATERIALS
PRESSE D'INJECTION POUR TRANSFORMER DES MATIERES PLASTIFIABLES

(30) Priorität: 02.10.1995 DE 19536565
(43) Veröffentlichungstag der Anmeldung: 22.07.1998
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: DE9601779
(87) Internationale Veröffentlichungsnummer: WO9712739

## Beschreibung

Die Erfindung betrifft eine Spritzgießmaschine zur Verarbeitung plastifizierbarer Massen nach dem Oberbegriff des Anspruches 1.

Die Teile einer derartigen Spritzgießmaschine sind hinsichtlich der Spritzgießeinheit z.B. aus der DE-C 43 17 998 und hinsichtlich der Formschließeinheit z.B. aus der DE-A 44 11 649 bekannt. Dort wurden bereits verschiedenste elektromechanische Spindelantriebe vorgeschlagen, um sowohl die formschließseitigen Kräfte aufzubringen als auch die spritzgießseitigen Bewegungen durchzuführen.

Eine derartige Spritzgießmaschine besitzt mehrere Baugruppen, die verschiedene Aufgaben haben. Eine erste Baugruppe ist für das Schließen des im Formspannraum aufgespannten Werkzeuges zuständig, wobei diese Baugruppe selbst oder eine weitere Baugruppe dann dafür vorgesehen ist, hier auch die Schließkraft aufzubringen. Eine zweite Baugruppe ist spritzgießseitig dafür zuständig, die Spritzgießeinheit an das Werkzeug anzulegen. Eine dritte Baugruppe bewegt die Einspritzbrücke, mit der das Fördermittel, eine Förderschnecke oder ein Förderkolben verbunden ist, auf den Trägerblock des Plastifizierzylinders zu, so daß sich eine Relativbewegung zwischen Fördermittel und Plastifizierzylinder ergibt, so daß vor der Förderschnecke plastifiziertes Material in den Formhohlraum eingespritzt werden kann. Ist das Spritzteil geformt, so ist formschließseitig eine Auswerfereinheit vorgesehen, die das Spritzteil aus dem Formhohlraum auswirft. Ergänzend kann an der Spritzgießeinheit noch eine Betätigungseinheit für eine Düsennadel vorgesehen werden, die je nach verarbeitendem Material erforderlich ist, um ein Ausfließen des plastifizierten Materials aus der Düse zu vermeiden.

Sämtliche Baugruppen unterscheiden sich nicht nur hinsichtlich ihrer Aufgaben, sondern werden auch mit verschiedenen Kräften beansprucht. Während zum Schließen der Form verhältnismäßig hohe Kräfte erforderlich sind, sind z.B. für das Anlegen der Düse oder noch viel mehr für das Auswerfen der Teile und das Betätigen der Verschlußdüse erheblich geringere Kräfte erforderlich. Bei der Verschlußdüse ist jedoch andererseits eine hohe Präzision zu gewährleisten, um Funktionsstörungen zu vermeiden.

An elektromechanisch angetriebenen Maschinen wurden zu diesem Zweck bereits verschiedenste Antriebe vorgeschlagen, die jedoch meist auf dem Prinzip der Kugelrollspindeln beruhen. Diese Kugelrollspindeln oder allgemeiner Spindelantriebe werden über Riemenantriebe, Getriebe oder dergleichen von einem Antriebsmotor angetrieben, damit die erforderlichen Kräfte aufgebracht werden können. Riemenantriebe sind jedoch laut und neigen ebenso wie Zahnradgetriebe zu einem verhältnismäßig großen Spiel, das die Präzision der Spritzgießmaschine negativ beeinflußt und insofern auch zu einer Qualitätsverschlechterung der auf diesen Maschinen hergestellten Spritzteile beiträgt.

Als neuartiger Spindelantrieb ist aus der EP-B 320 621 ein Planeten-Wälz-Gewindespindelantrieb bekannt, der die Vorteile eines Planetengetriebes mit den Vorteilen einer Wälzspindel verbindet. Zu diesem Zweck werden zwischen Mutter und Spindel Planetenrollen vorgesehen, die mit ihrem Außengewinde spindelseitig mit dem Gewinde der Spindel in Verbindung stehen, andererseits zwischen sich Ausnehmungen aufweisen, die mutterseitig in Rillen eintauchen. Dadurch ist eine Kraftübersetzung möglich, so daß eine schnelle Drehbewegung in eine langsame Axialbewegung unter Kraftsteigerung umsetzbar ist oder umgekehrt. Mit dieser Planeten-Wälz-Gewindespindel können Drehbewegungen sehr präzise in Längsbewegungen umgesetzt werden. Wesentliches Unterscheidungsmerkmal zu herkömmlichen Systemen ist der extrem große Variationsbereich der Steigung. So können Spindeln mit Steigungen ab 0,1 mm pro Umdrehung hergestellt werden, die sich insbesondere zur exakten Bewegungsansteuerung eignen. Die ausschließlich rollende Bewegung führt zu einem hohen Wirkungsgrad. Werden zudem derartige Spindeln entsprechend bemessen, so kann die dynamische Tragzahl leicht bis zur statischen Tragzahl heraufgesetzt werden, was zur Lebensdauer der Antriebe beiträgt. Die Spindeln lassen sich zwar geräuscharm betreiben, jedoch ergibt sich aufgrund der Vielzahl der ineinandergreifenden Gewinde immer noch ein unerwünschtes Spiel, worin wohl der Grund dafür zu sehen ist, daß dieser Antrieb bisher keinen umfassenden Eingang im Bereich der Kunststoff-Spritzgießmaschinen gefunden hat, obwohl auf diesem Bereich seit mehreren Jahren verstärkt versucht wird, elektrisch betriebene Maschinen marktfähig herzustellen.

Der Planeten-Wälz-Gewindespindelantrieb wurde nach der dem Oberbegriff des Anspruches 1 zugrundeliegenden DE-A 44 09 822 auch schon für den Antrieb von Kunststoff-Spritzgießmaschinen vorgeschlagen. Er eignet sich sowohl für präzise Aufgaben, als auch zur Aufbringung von hohen Kräften, wobei die bei der Spritzgießmaschine erforderliche Präzision dadurch erreicht wird, daß ein passives Rückdrehen über Sicherungsmittel verhindert wird. Dies wird bei diesen Antrieben dadurch erleichtert, daß einerseits die Gewindesteigung insbesondere der Spindel sehr großzügig gewählt werden kann, andererseits diese Antriebe sich dennoch bei annembarer Geräuschemission schnell drehen lassen. Somit kann bedarfsweise die Gewindesteigung so klein gewählt werden, daß eine Selbsthemmung eintritt, ohne dadurch bei der Bewegung an Zykluszeit zu verlieren.

Ausgehend von diesem Stand der Technik liegt der vorliegenden Erfindung die Aufgabe zugrunde, die Vorteile eines Planeten-Wälz-Gewindespindelantriebs einer Anwendung an einer Spritzgießmaschine zugänglich zu machen und gleichzeitig den an die Präzision zu stellenden Anforderungen zu genügen.

Diese Aufgabe wird durch die Merkmale des Anspruches 1 gelöst.

Unter Verwendung des Planeten-Wälz-Gewindespindelantriebes läßt sich eine entsprechende Kraftübersetzung realisieren, wenn entsprechende Sicherungsmittel vorgesehen werden. Die Teile des Planeten-Wälz-Gewindespindelantriebes werden so gelagert, daß das drehbare Teil in Längsrichtung beweglich gelagert ist, wobei die Lagerung gegen elastische Rückstellmittel erfolgt. Die Kraft der elastischen Rückstellmittel wird dann durch eine äußere Kraft überwunden, bis schließlich das die Präzision störende Gewindespiel beseitigt ist. Dadurch lassen sich insbesondere in Verbindung mit zugehörigen Absolut-Wegmeßsystemen die Stellungen der Baugruppen genau erfassen, so daß die unvorhersehbaren Einflüsse von Bewegungen mit Schlupf vernachlässigbar werden.

### Kurzbeschreibung der Figuren

- Fig. 1: Eine Draufsicht auf die Spritzgießmaschine,
- Fig. 2: einen vergrößerten Ausschnitt von Fig. 1 im Bereich der Formschließeinheit,
- Fig. 3: einen vergrößerten Ausschnitt von Fig. 1 im Bereich der Spritzgießeinheit,
- Fig. 4: einen vergrößerten Ausschnitt im Bereich eines Einbaumotors, der mit einer Planeten-Wälz-Gewindespindel versehen ist,
- Fig. 5: einen vergrößerten Ausschnitt aus Fig. 4 im Bereich des Planeten-Wälz-Gewindespindelantriebs,
- Fig. 6-8: Darstellungen gemäß Fig. 5 in verschiedenen Ausführungsformen,
- Fig. 9: einen Schnitt durch eine Kombination eines Planetengetriebes mit einem Planeten-Wälz-Gewindespindelantrieb,
- Fig. 10: eine Darstellung gemäß Fig. 2 in einer weiteren Ausführungsform,
- Fig. 11: einen vergrößerten Ausschnitt aus Fig. 10 im Bereich des Antriebs,
- Fig. 12: eine Seitenansicht einer Plastifiziereinheit mit einem Antrieb für eine Verschlußdüse,
- Fig. 13: einen vergrößerten Ausschnitt im Bereich des Antriebs der Fig. 12.

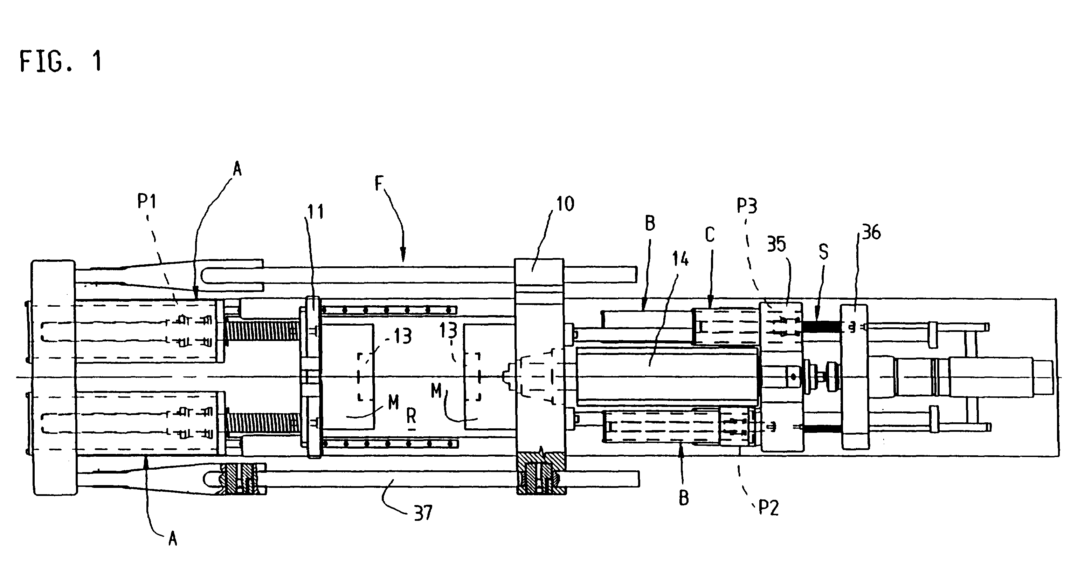

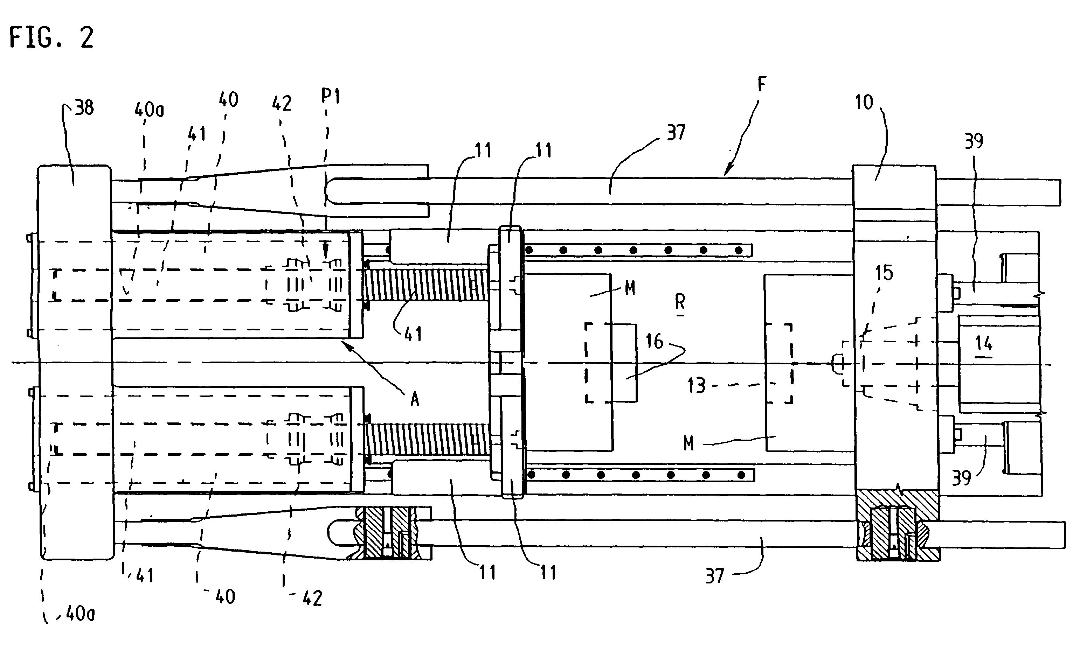

Fig. 1 zeigt eine Spritzgießmaschine, die üblicherweise zur Verarbeitung plastifizierbarer Massen wie Kunststoffe, pulvrige, keramische Massen oder ähnliche Materialien geeignet ist. Eine derartige Spritzgießmaschine umfaßt zunächst gemäß Fig. 2 eine Formschließeinheit F. Diese Formschließeinheit F weist einen stationären Formträger 10 sowie einen beweglichen Formträger 11 auf. Die beiden Formträger bilden zwischen sich einen Formspannraum R aus, der für die Aufnahme eines Werkzeugs M bestimmt ist. Das Werkzeug M umschließt im geschlossenen Zustand einen Formhohlraum 13, in dem Spritzteile 16 hergestellt werden. Der bewegliche Formträger 11 ist über einen elektromechanischen Antrieb, hier mit einer Planeten-Wälz-Gewindespindel auf den stationären Formträger zu und von diesem weg bewegbar, wobei sich der Schließmechanismus an einem Abstützelement 38 abstützt.

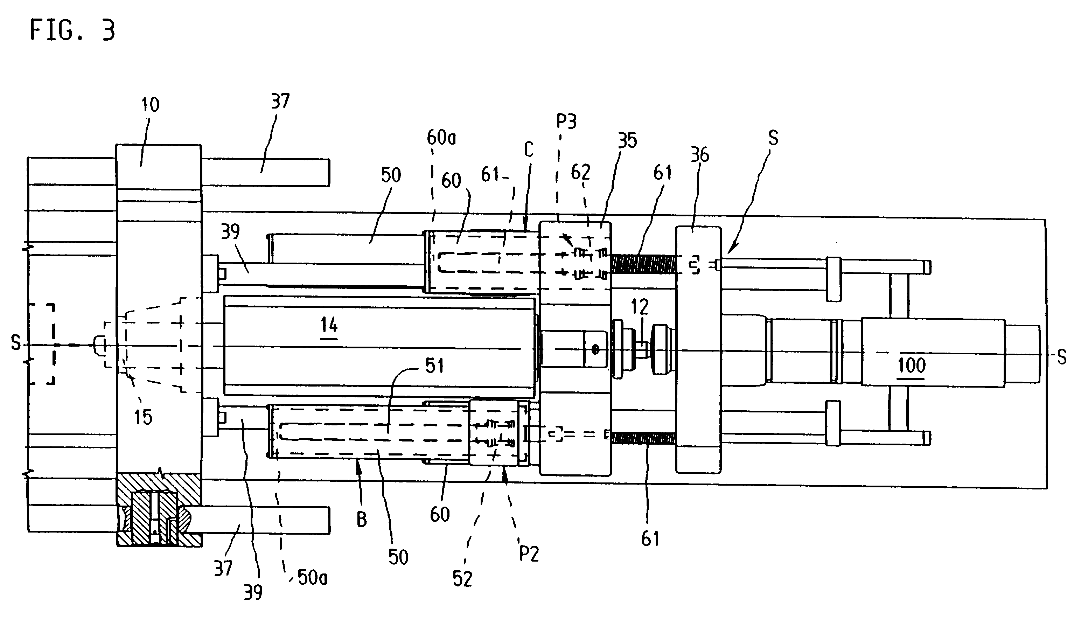

Die Spritzgießmaschine besitzt ferner gemäß Fig. 3 eine Spritzgießeinheit S. In der Spritzgießeinheit ist ein Fördermittel 12 aufgenommen, das im vorliegenden Fall eine Förderschnecke ist, jedoch ein Förderkolben sein kann. Die Förderschnecke wird über einen Rotationsmotor 100 rotiert. Durch das Fördermittel wird das plastifizierte Material in den Formhohlraum 13 gefördert, nachdem es von der Plastifiziereinheit 14 plastifiziert wurde.

An dieser Spritzgießmaschine sind nun mehrere Baugruppen vorgesehen, die hier elektromechanische Spindelantriebe aufweisen, die eine Rotationsbewegung in eine Geradeaus-Bewegung umsetzen. Im einzelnen handelt es sich dabei zunächst um wenigstens eine erste als Schließeinheit ausgebildete Baugruppe A, die in der Formschließeinheit die Formträger aufeinander zu und voneinander weg bewegt. Diese erste Baugruppe A kann dabei gleichzeitig die Formschließkraft aufbringen, es besteht jedoch auch die Möglichkeit, eine weitere Baugruppe vorzusehen, die die Schließkraft aufbringt, wie dies z.B. in der DE-C 44 11 649 näher erläutert wird.

Auf der Spritzgießseite befindet sich dann als Antriebseinheit ausgebildet die zweite Baugruppe B, die zum "Düsefahren" bestimmt ist und durch die die Düse 15 der Spritzgießeinheit S auf das Werkzeug M aufsetzbar ist. Diese Baugruppen werden meist parallelachsig und symmetrisch zur Spritzachse aufgebaut, um eine symmetrische Krafteinleitung zu erzielen. Als dritte Baugruppe C wird eine Einspritzeinheit vorgesehen. Auch diese Einspritzeinheit besteht üblicherweise aus zwei Antrieben, die parallelachsig arbeiten. Sie dient dazu, das Fördermittel 12 relativ zum Plastifizierzylinder 14 anzutreiben. Zu diesem Zweck ist das Fördermittel 12 mit einer Einspritzbrücke 36 verbunden. An der Einspritzbrücke greift die dritte Baugruppe C an, die andernends am Trägerblock befestigt ist, der seinerseits die Plastifiziereinheit 14 aufnimmt. Bei Bewegung ergibt sich insofern eine Relativbewegung zwischen Trägerblock 35 und Einspritzbrücke 36, so daß sich gleichzeitig eine Relativbewegung zwischen Fördermittel und Plastifiziereinheit 14 ergibt.

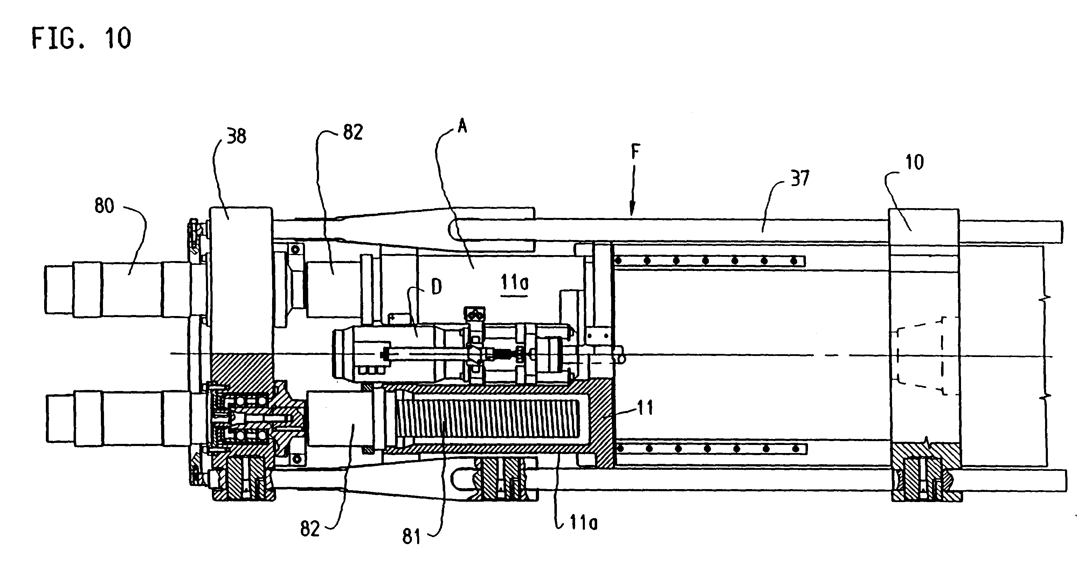

Bedarfsweise kann ferner als Auswerfereinheit, Kernzug oder Ausschraubeinheit eine vierte Baugruppe D vorgesehen werden, die dafür bestimmt ist, Spritzteile 16 aus dem Werkzeug M auszuwerfen. Diese Auswerfereinheit ist so angeordnet, daß ihr gemäß Fig. 10 ausreichend Raum zwischen den beiden Elementen der ersten BaugruppeA zur Verfügung steht. Als fünfte Baugruppe E kann bedarfsweise ein Mechanismus zur Betätigung einer Verschlußnadel 17 für die Düse 15 der Spritzgießeinheit vorgesehen werden.

Wenigstens eine dieser Baugruppen A,B,C,D,E, im Ausführungsbeispiel alle Baugruppen, sind mit einem elektromechanischen Spindelantrieb ausgerüstet. Spindel und Mutter sind dabei Teil von Planeten-Wälz-Gewindespindeln P1,P2,P3,P4,P5, die über Sicherungsmittel gegen Rückdrehen gesichert sind. So findet sich zunächst in Fig. 2 die Planeten-Wälz-Gewindespindel P1 der ersten Baugruppe A. Spindeln 41 dieses Antriebs stehen mit dem beweglichen Formträger 11 in Verbindung, deren Längsbewegung über zwei Hohlwellenmotoren 40 erfolgt, die hier Einbaumotoren mit integriertem Planeten-Wälz-Gewindespindelantrieben sind. Rotiert wird die Mutter 42, während die Spindel 41 drehfest am beweglichen Formträger 11 angeordnet ist und in den Hohlraum 40a des Hohlwellenmotors eintaucht. Abstützelement 38 und stationärer Formträger 10 sind über ein Kraftübertragungselement 37 miteinander verbunden, das hier ein C-förmiger mehrteiliger Bügel ist. Die alternative Verwendung von Holmen ist problemlos möglich.

In Fig. 3 ist hinsichtlich der dritten Baugruppe C der Hohlwellenmotor 60 der Einspritzeinheit am Trägerblock 35 befestigt. Die Spindel 61 ist drehfest mit der Einspritzbrücke 36 verbunden. Bei Betätigung der Mutter 62 zieht die Spindel die Einspritzbrücke 36 zum Trägerblock 35. Die Spindel 61 taucht in einen Hohlraum 60a des Hohlwellenmotors 60 ein. Die zweite Baugruppe B ist mit ihrer Spindel drehfest am Trägerblock gelagert. Zusätzlich ist der Hohlwellenmotor 50 an einer stationären Halteplatte festgelegt, wobei diese wiederum über die zwei Führungssäulen 39 zum stationären Formträger 10 auf Abstand gehalten wird. Die Spindel 51 zieht die gesamte Einheit gegen den stationären Formträger 10, wobei sie in den Hohlraum 50a des Hohlwellenmotors eintaucht.

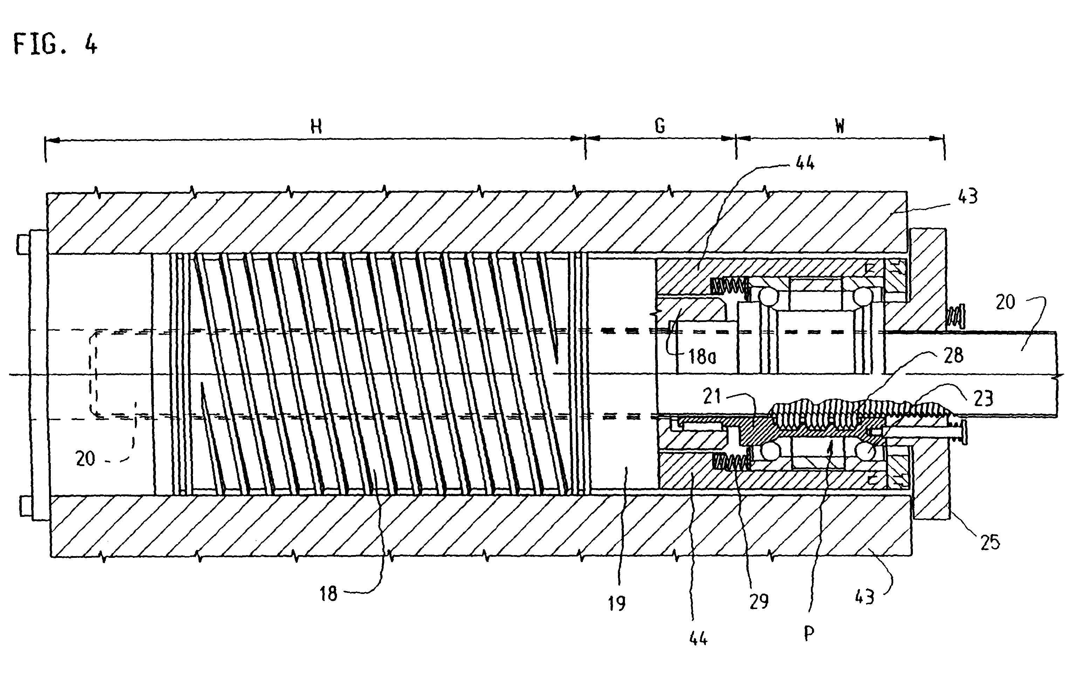

Figur 4 zeigt einen Schnitt durch eine Baugruppe, die mit dem Planeten-Wälz-Gewindespindelantrieb ausgestattet ist. Der Hohlwellenmotor 18 wird dabei als Einbaumotor in eine Motoraufnahme 43 eingeführt. Im Bereich H liegt der eigentliche Motor, im Bereich G können Getriebe wie z.B. integrierte Planetengetriebe vorgesehen werden und im Bereich W ist Raum für die Unterbringung der Planeten-Wälz-Gewindespindel P. Die Spindel 20 taucht in den Hohlwellenmotor ein. Sie wird ausgehend vom Motor über eine Antriebswelle 18a angetrieben, die ihre Kraft zunächst auf die Mutter 21 überträgt. Die Mutter 21 steht über die Planetenrollen 28 ihrerseits aber wieder mit der Spindel in Verbindung.

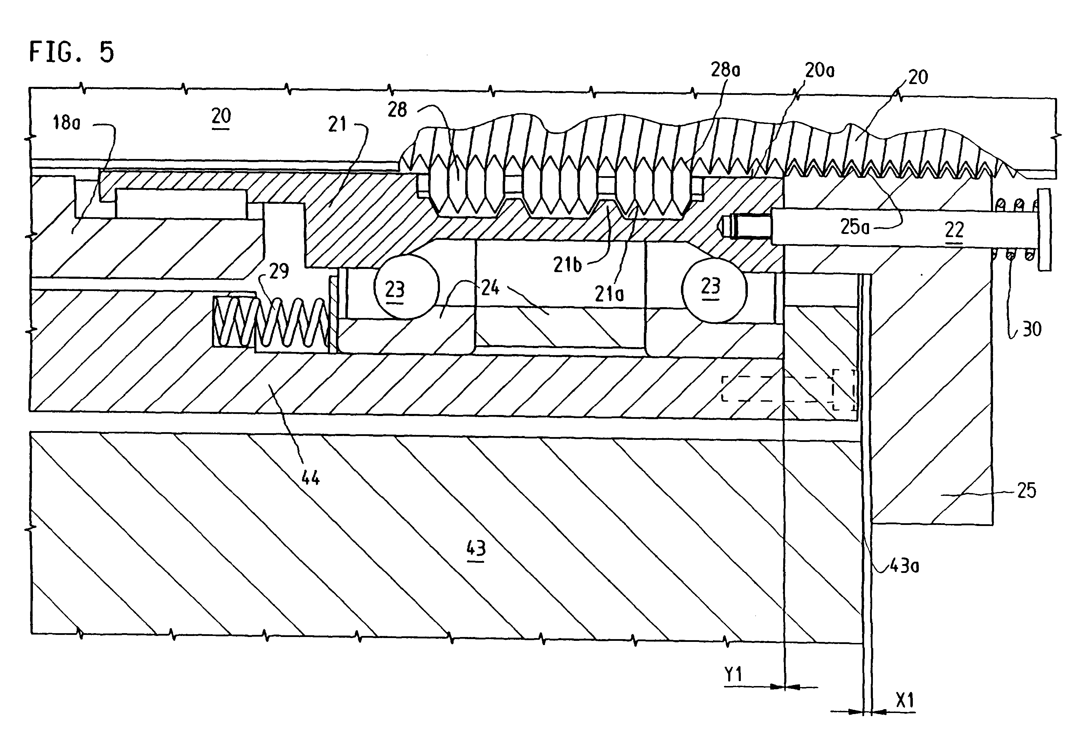

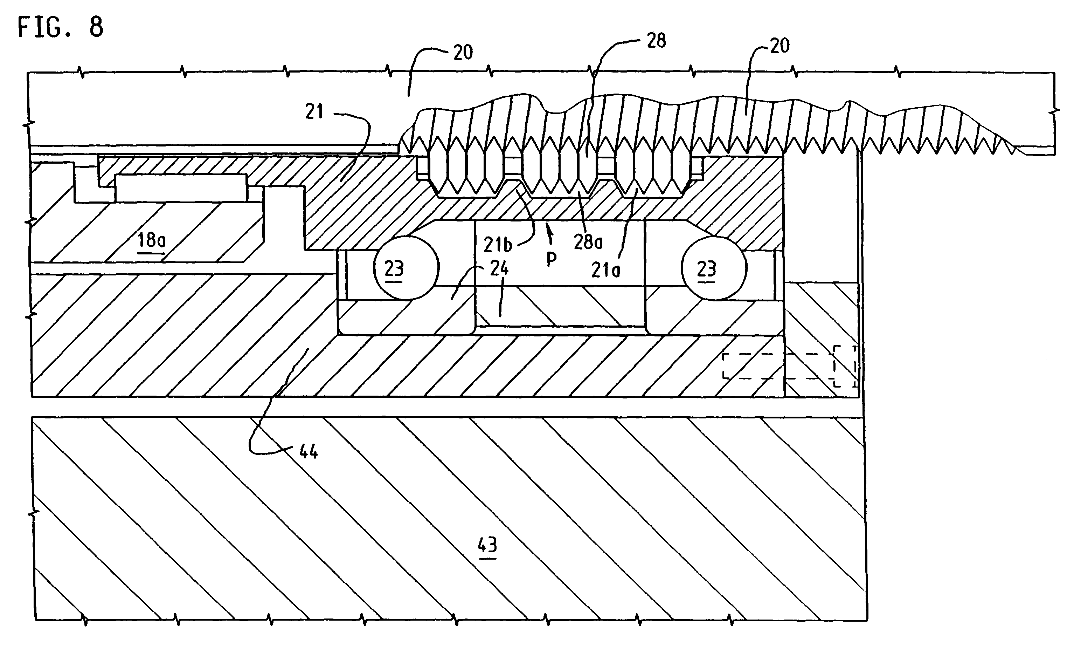

In den Figuren 5 bis 8 sind verschiedene Ausführungsformen dargestellt, die Sicherungsmittel enthalten, die die Planeten-Wälz-Gewindespindel gegen passives Rückdrehen sichern. Aus Figur 8 ergibt sich jedoch zunächst nochmals das genaue Prinzip dieses Planeten-Wälz-Gewindespindelantriebs. Über die Antriebswelle 18a wird die Rotation zunächst auf die Mutter 21 übertragen. Die Mutter 21 ist in Kugellagern 23 in einem Lagerschlitten 24 gelagert. Die Mutter 21 besitzt innenseitig Rillen 21b und Ausnehmungen 21a. Die Rillen korrespondieren mit entsprechenden Ausnehmungen in den Planetenrollen, während ein Gewinde 28a der Planetenrollen 28 mit dem Gewinde 20a der Spindel zusammenarbeitet. Dadurch kann eine Kraftübersetzung erfolgen. Fig. 8 zeigt nun die Lagerung dieses Antriebs im Stator 44 des Hohlwellenmotors. In diesem Fall werden als Sicherungsmittel Gewindesteigungen auf Spindel 20 und Planetenrolle gewählt, die eine selbsthemmende Verbindung ermöglichen, was gegebenenfalls mit einer geringen Steigung erkauft werden muß, bei Verwendung dieses Antriebs aber dadurch wieder ausgeglichen wird, daß auch hohe Rotationsgeschwindigkeiten bei dennoch geringer Geräuschemission möglich sind. Im Fall der Fig. 8 läßt sich jedoch eine Kraftentkopplung nicht vornehmen, so daß die Planeten-Wälz-Gewindespindel stets den vollen Kräften ausgesetzt ist.

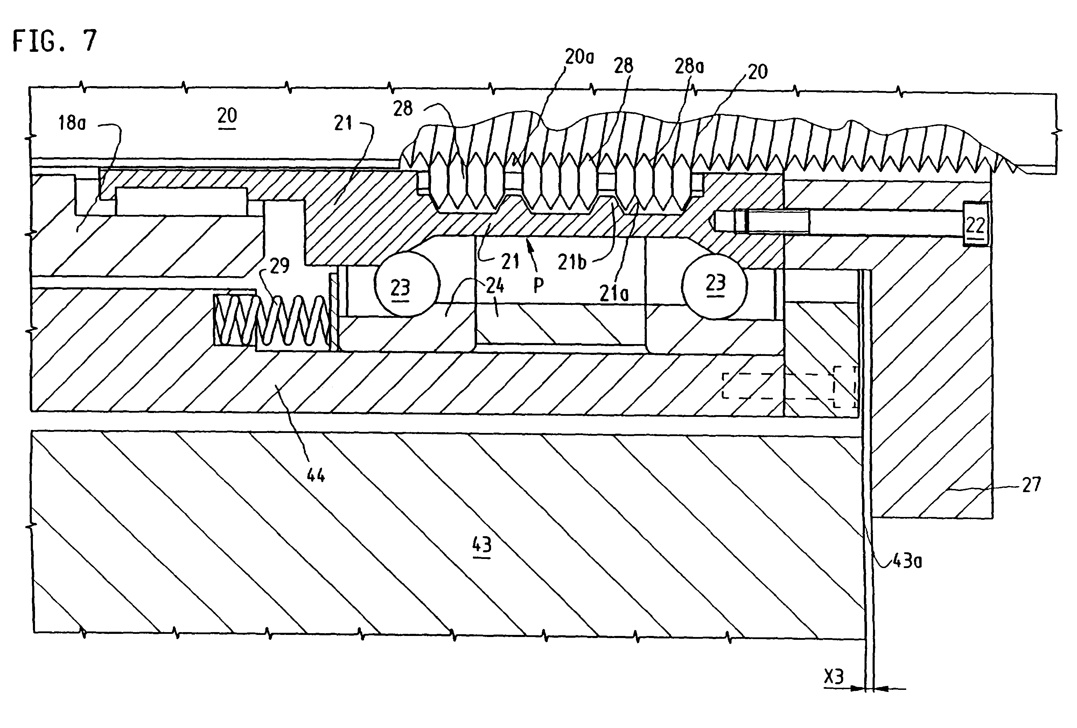

Eine demgegenüber verbesserte Ausführungsform ergibt sich gemäß Fig. 7. Bei sonst identischer Ausführungsform ist der Lagerschlitten 24 gegen ein elastisches Rückstellelement 29 begrenzt verschieblich. Schiebt die Spindel in diesem Fall von rechts, so bewegt sich der Schlitten 24 bei Übersteigen der Kraft des Rückstellmittels 29 nach links, wobei die Mutter 21 über den Bolzen 22 die Haltescheibe 27 mitnimmt. Dabei verschwindet das Maß X3, so daß die Haltescheibe 27 zur Anlage an der Bremsfläche 43a der Motoraufnahme 43 kommt. Somit ist also das drehbare Teil, hier die Mutter 21 des Planeten-Wälz-Gewindespindelantriebs gegen die Kraft des elastischen Rückstellmittels 29 in Längsrichtung der Spindel 20 beweglich gelagert. Blokkiermittel in Form der Haltescheibe 27 sind vorgesehen, die die Teile des Antriebs infolge einer durch eine äußere Kraft hervorgerufene Reaktionskraft unter Überwindung der Kraft der Rückstellmittel 29 drehgesichert festlegen. Damit wird ein Anpressen der Bauteile des Antriebs untereinander ermöglicht, was das Gewindespiel unterdrückt.

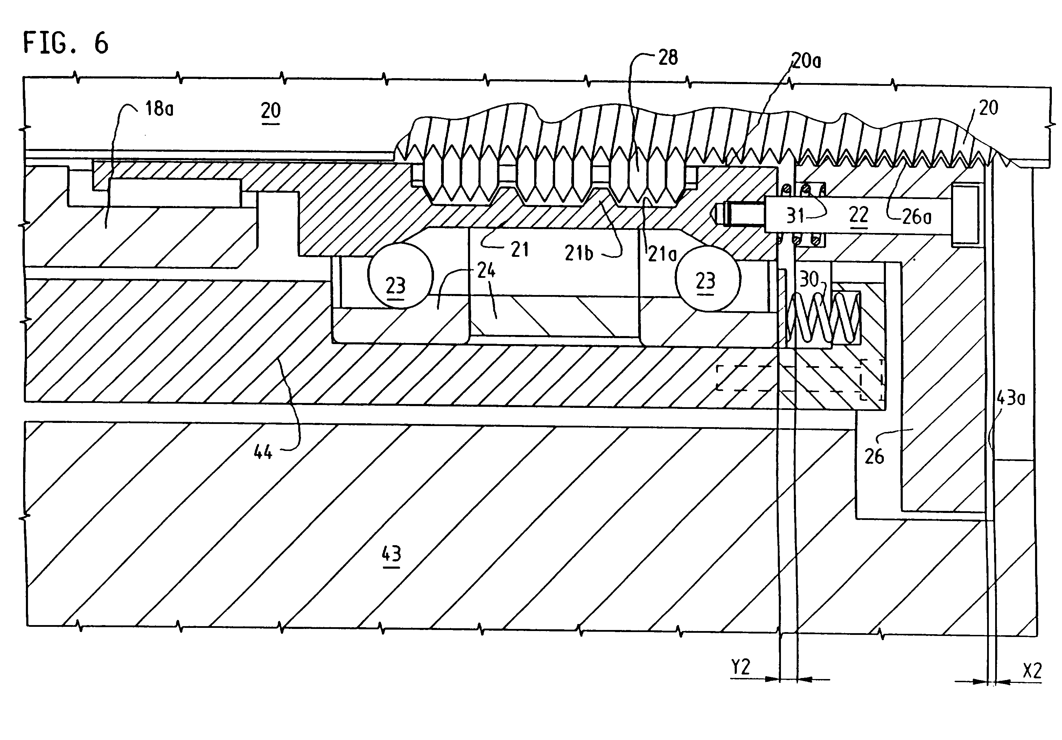

Die Figuren 5 und 6 zeigen eine weitere Verbesserung dieser drehsicheren Festlegung, einmal für eine schiebende Spindel in Fig. 5 und für eine ziehende Spindel in Fig. 6. Bei sonst gleicher Ausführungsform wie in Fig. 7 schiebt die Spindel in Fig. 5 von rechts. Dies führt zunächst beim Auftreten einer Kraft, die die Kraft des Rückstellmittels 29 übersteigt, zu einem Verschieben des Lagerschlittens 24 in Fig. 5 nach links. Die Mutter 21 nimmt wiederum den Bolzen 22 mit, der jedoch in diesem Fall über ein weiteres elastisches Rückstellmittel die Haltescheibe 25 erst beaufschlagt, wenn das Maß yl so groß wird, daß das Maß X1 gegen Null geht. Erst dann kann die Haltescheibe 25 an der Bremsfläche 43a der Motoraufnahme zur Anlage kommen.

In Fig. 6 wird grundsätzlich das gleiche Prinzip verfolgt, jedoch zieht hier die Spindel 20 nach rechts. Insofern befindet sich auch das Rückstellmittel 30 auf der rechten Seite des Lagerschlittens 24 und setzt sich insofern der Verschiebung des Lagerschlittens 24 nach rechts zunächst entgegen. Ebenso ist das weitere Rückstellmittel 31 auf der anderen Seite angeordnet. Beim Auftreten einer ausreichenden Kraft wird zunächst das Maß Y2 verringert, bis sich unter Überwindung ebenfalls der Kraft des weiteren Rückstellmittels 31 eine Anlage zwischen der Haltescheibe 26 an der Bremsfläche 43a der Motoraufnahme ergibt.

Ein weiterer Unterschied der Lösung gemäß Fig. 5 und Fig. 6 gegenüber der Lösung von Fig. 7 besteht aber auch darin, daß in Fig. 7 die Haltescheibe 27 keine Profilierung zur Spindel aufweist. In den Figuren 5 und 6 besitzen die Haltescheiben 25 und 26 nämlich Profilierungen 25a,26a, die mit dem Gewinde 20a der Spindel in Verbindung stehen. Dies führt dazu, daß wenn sich eine entsprechende Verschiebung beim Auftreten entsprechender Kräfte ergibt, auch in diesem Bereich eine Drehsicherung der Spindel verteilt auf eine größere Fläche ergibt. Somit kann die Planeten-Wälz-Gewindespindel unter Erhöhung ihrer Lebensdauer aus dem Kraftfluß ausgekoppelt werden, während die Rückdrehsicherung in Fig. 7 lediglich durch eine flächige Anlage zwischen Haltescheibe 27 und Motoraufnahme 43 erfolgt.

Insbesondere in Verbindung mit zeichnerisch mit Ausnahme an der Auswerfereinheit nicht dargestellten Absolutwegmeßsystemen 95 können in allen Fällen trotz der elektromechanischen Antriebe Steuerungen und Regelungen an den genanntene Achsen der Spritzgießmaschine mit entsprechender Genauigkeit betrieben werden, ohne daß Gewindespiel oder Schlupf eine Rolle spielen. Dies macht sich in Verbindung mit den zum Teil geringen Gewindesteigungen in einer hohen Präzision der gesamten Maschine und damir der auf der Maschine gefertigten Teile bemerkbar.

Anhand der vorausgegangenen Erläuterungen ergibt sich, daß eine Ausführungsform gemäß Fig. 5 bei der ersten Baugruppe A, eine Ausführungsform gemäß Fig. 6 bei der zweiten Baugruppe B und eine Ausführungsform gemäß Fig. 8 beispielsweise bei der dritten und vierten Baugruppe bevorzugt eingesetzt wird, da insbesondere bei den letzten beiden Baugruppen C,D eine Haltescheibe nicht erforderlich ist.

Verschiedene Getriebeverbindungen können mit der Spindel gekoppelt werden. Dies ist einerseits erforderlich, um mit möglichst gleichbleibenden Baueinheiten einen modularen Aufbau der Spritzgießmaschine zu verwirklichen. Die Antriebsmotoren sind dabei in ihrer Größe weitgehend baugleich, lediglich hinsichtlich der Planetengetriebe findet eine Anpassung statt. Andererseits erhöhen die zum großen Teil mitrotierenden Haltescheiben die Massenträgheitsmomente, so daß der Einsatz von Planetengetrieben erforderlich ist. Die Verwendung des Planeten-Wälz-Gewindespindelantriebs in Verbindung mit einem Hohlwellenmotor und gegebenenfalls in Kombination mit einem weiteren Planetengetriebe trägt aber auch zur Verringerung der Bauhöhe der Baugruppen und damit zur Reduzierung der Größe der gesamten Spritzgießmaschine bei.

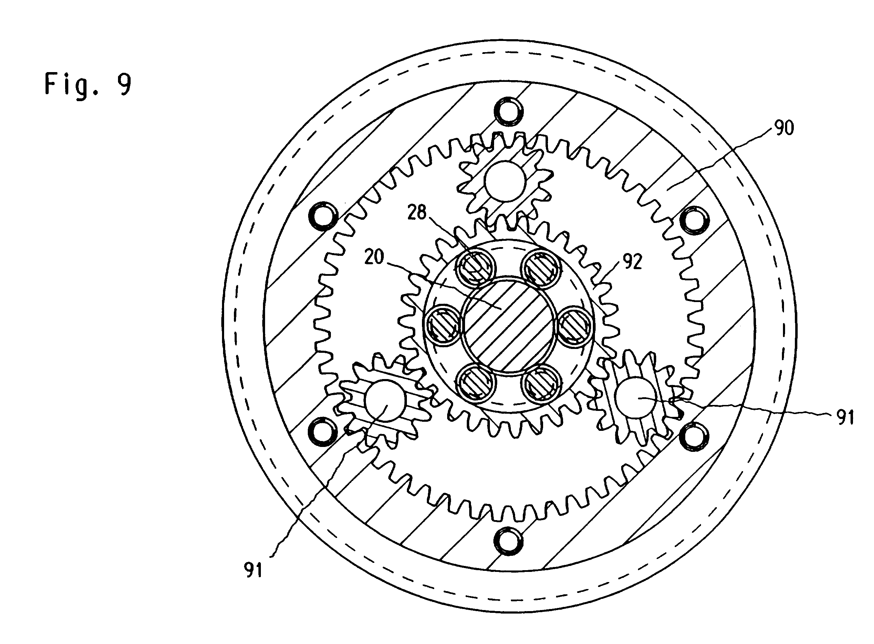

Fig. 9 zeigt eine Kombination verschiedener Planetengetriebe miteinander. In diesem Fall ist in einem Motor ein Antriebsrad 90 vorgesehen, das mit einem üblichen Planetengetriebe zusammenabeitet, das aus den Planetenrädern 91 und dem Sonnenrad 92 besteht. Im Sonnenrad 92 ist wiederum eine Planeten-Wälz-Gewindespindel angeordnet mit Planetenrollen 28 und Spindel 20. Durch eine entsprechende Anordnung der beiden Teile hintereinander und nicht ineinander können hier ausreichende Querschnitte realisiert werden. Ohnehin ist es nicht zwingend erforderlich, die Antriebsmotoren als Hohlwellenmotoren auszubilden. So kann z.B. an einem Motor mit integriertem Planetengetriebe eine Spindel angekoppelt werden, die rotiert wird und im Bereich der Spindel selbst wiederum mit der drehfest angeordneten Mutter einer Planeten-Wälz-Gewindespindel zusammenarbeitet. Auch dadurch lassen sich entsprechende Kraftübertragungen verwirklichen.

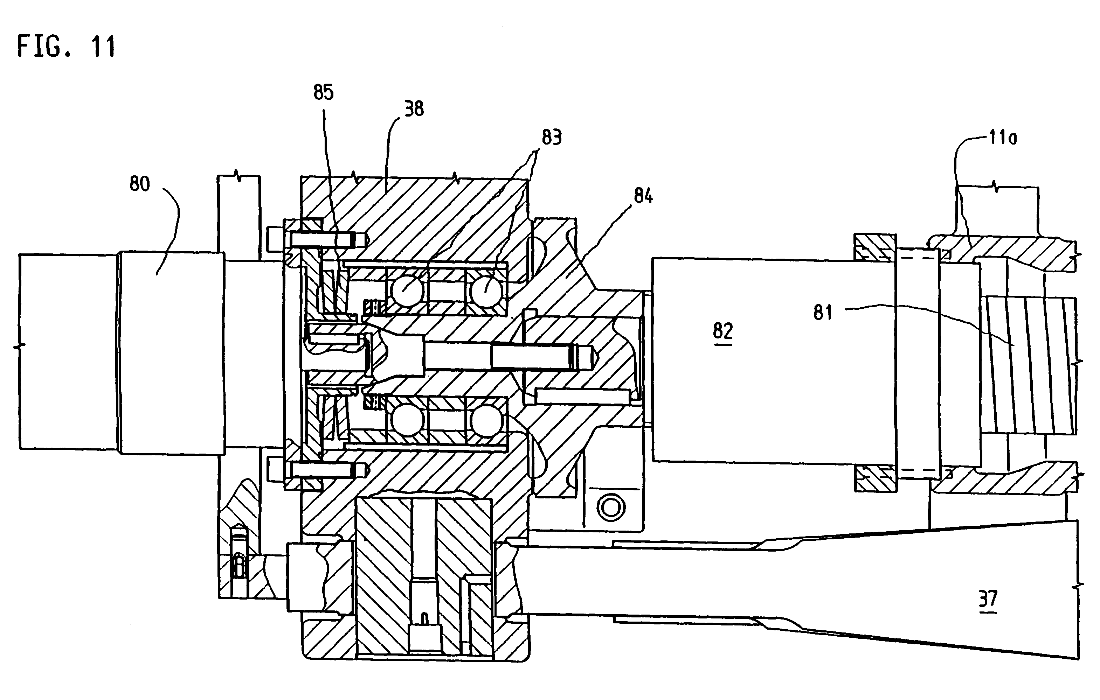

Fig. 10 stellt eine weitere Ausführungsform der Formschließeinheit F dar. Der bewegliche Formträger 11 besitzt hier Aufnahmen 11a, an denen die Spindelmutter 82 befestigt ist. Durch die Spindelmutter hindurch ragt eine Spindel, die in die Aufnahmen 11a eintaucht und von einem an der Abstützplatte 38 angeordneten Motor angetrieben wird. Eine vergrößerte Darstellung im Bereich der Lagerung zeigt Fig. 11. Der Motor 80 treibt die Spindel 81 an, wobei die Spindel axial beweglich über elastische Rückstellmittel 85 gelagert ist. Eine weitere Lagerung erfolgt über die Lager 83. Der Spindel zugeordnet ist eine Haltescheibe 84, so daß bei Auftreten einer entsprechenden Kraft ein Kraftschluß zwischen der Haltescheibe 84 und dem Abstützelement 38 erfolgt. Eine zusätzliche Kraftübertragung kann im Bereich der Mutter 82 des Planeten-Wälz-Gewindespindelantriebs erfolgen.

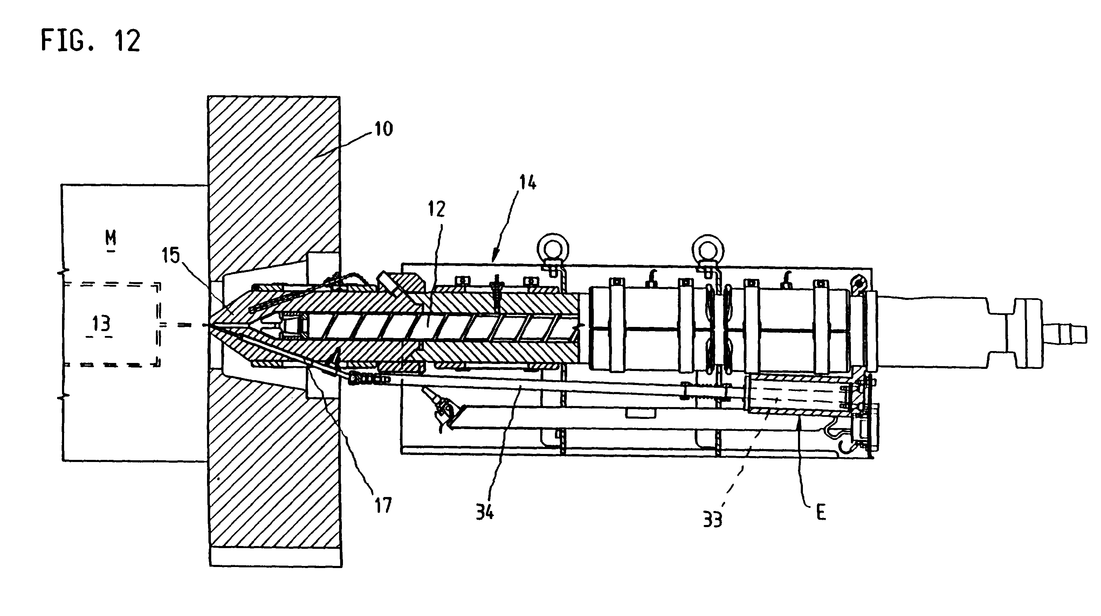

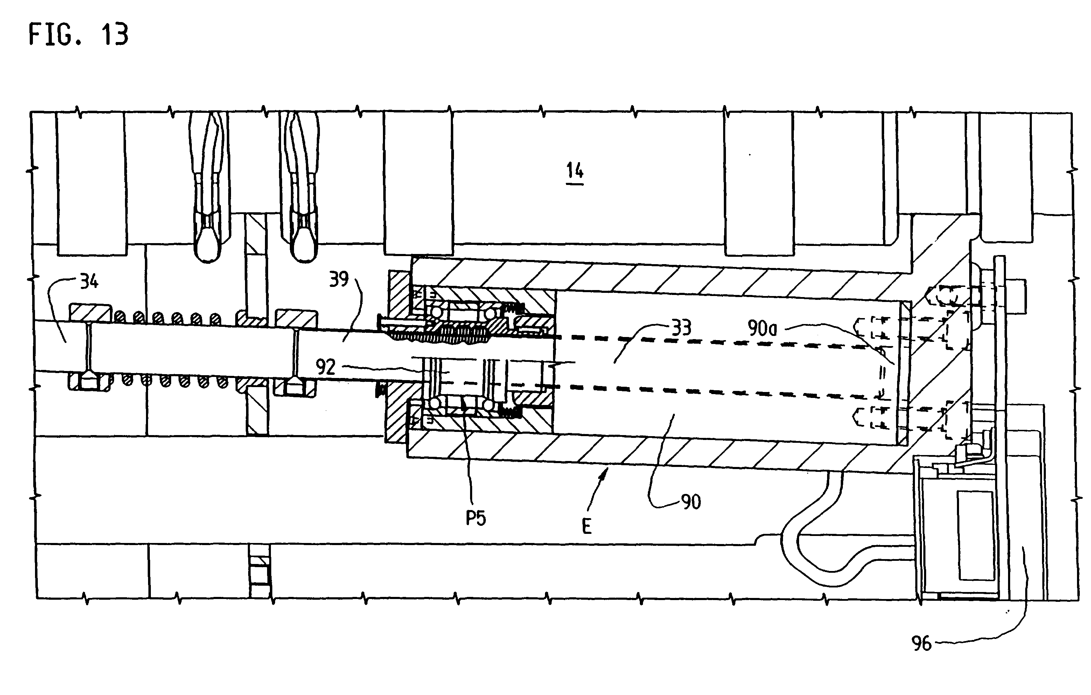

In den Figuren 12 und 13 schließlich ist die fünfte Baugruppe E dargestellt. Der Planeten-Wälz-Gewindespindelantrieb steht mit seiner Spindel 33 unmittelbar mit dem Betätigungsgestänge 34 der Verschlußnadel 95 für die Düse 15 in Verbindung. Die Baugruppe E bildet mit der Plastifiziereinheit 14 eine bauliche Einheit, so daß bei einem Wechsel der Plastifiziereinheit 14 auch die fünfte Baugruppe mitgewechselt wird. Beim Ankoppeln der Plastifiziereinheit an den Trägerblock ergibt sich dann von selbst eine Verbindung zwischen dem Stecker 96 und der Spritzgießmaschine. Der Antriebsmotor ist ein Hohlwellenmotor 90, in dessen Hohlraum 90a die Spindel 33 eintaucht. Der Antrieb der Spindel erfolgt über die Mutter 92. Der Einsatz des Planeten-Wälz-Gewindespindelantriebs an dieser Stelle hat den Vorteil, daß dieser äußerst präzise angesteuert werden kann, so daß die bei elektrischen Verschlußdüsen-Betätigungsmechanismen auftretenden Probleme bewältigt werden können. Auch hier kann eine Rückdrehsicherung gemäß den in den Figuren 5 bis 8 erläuterten Ausführungen vorgenommen werden.

## Patentansprüche

1. Spritzgießmaschine zur Verarbeitung plastifizierbarer Massen mit einer Formschließeinheit (F) mit einem stationären Formträger (10) und einem beweglichen Formträger (11), die zwischen sich einen Formspannraum (R) zur Aufnahme eines Werkzeugs (M) bilden, das einen Formhohlraum (13) aufweist,
sowie mit einer Spritzgießeinheit (S), die ein Fördermittel (12) zum Fördern des plastifizierbaren Materials in den Formhohlraum (13) des Werkzeugs (M) und eine Plastifiziereinheit (14) umfaßt, und mit
- wenigstens einer ersten als Schließeinheit ausgebildeten Baugruppe (A), die in der Formschließeinheit den beweglichen Formträger (11) auf den stationären Formträger (10) zu und von ihm weg bewegt sowie die Formschließkraft aufbringt,
- wenigstens einer als Antriebseinheit ausgebildeten zweiten Baugruppe (B), über die die Düse (15) der Spritzgießeinheit (S) auf das Werkzeug (M) aufsetzbar ist,
- wenigstens einer als Einspritzeinheit ausgebildeten dritten Baugruppe (C), die zur Einspritzbewegung das Fördermittel (12) relativ zur Plastifiziereinheit (14) bewegt,
wobei wenigstens eine dieser Baugruppen einen elektromechanischen Spindelantrieb aufweist, wobei Spindel (20) und Mutter (21) Teil einer Planeten-Wälz-Gewindespindel (P1,P2,P3,P4,P5) sind, die über Sicherungsmittel gegen passives Rückdrehen gesichert sind, dadurch gekennzeichnet, daß als Sicherungsmittel zumindest das drehbare Teil von Mutter (21) und Spindel (20) der Planeten-Wälz-Gewindespindel gegen die Kraft eines elastischen Rückstellmittels (29,30) in Längsrichtung der Spindel (20) beweglich gelagert ist und daß Blockiermittel vorgesehen sind, die die Teile der Planeten-Wälz-Gewindespindel infolge einer durch eine äußere Kraft hervorgerufenen Reaktionskraft unter Überwindung der Kraft der Rückstellmittel (29,30) drehgesichert festlegen.

2. Spritzgießmaschine nach Anspruch 1, dadurch gekennzeichnet, daß der elektromechanische Spindelantrieb auch an einer als Auswerfereinheit ausgebildeten vierten Baugruppe (D), die Spritzteile (16) aus dem Werkzeug (M) auswirft, vorgesehen ist.

3. Spritzgießmaschine nach Anspruch 1, dadurch gekennzeichnet, daß die Mutter (21) der Planeten-Wälz-Gewindespindel in Lagern drehbar gelagert ist, die auf einem Lagerschlitten (24) gegen die Kraft des elastischen Rückstellmittels (29,30) in Längsrichtung der Spindel (20) verschieblich sind, und daß mit der Mutter (21) eine Haltescheibe (25,26,27) verbunden ist, die bei Auftreten der äußeren Kraft an einer Bremsfläche (43a) zur Anlage kommt.

4. Spritzgießmaschine nach Anspruch 3, dadurch gekennzeichnet, daß die Haltescheibe (25,26) eine in das Gewinde (20a) der Spindel (20) eingreifende Profilierung (25a,26a) aufweist.

5. Spritzgießmaschine nach Anspruch 3, dadurch gekennzeichnet, daß die Haltescheibe (25,26) in Längsrichtung der Spindel (20) gegen die Kraft eines weiteren elastischen Rückstellmittels (31,32) beweglich gelagert ist.

6. Spritzgießmaschine nach Anspruch 1, dadurch gekennzeichnet, daß ein Hohlwellenmotor (18) die Mutter (21) der Planeten-Wälz-Gewindespindel antreibt, wobei bei Betätigung die Spindel (20) in den Hohlwellenmotor (18) eintaucht.

7. Spritzgießmaschine nach Anspruch 6, dadurch gekennzeichnet, daß ein weiteres Planetengetriebe (19) im Hohlwellenmotor (18) integriert ist, das abtriebsseitig die Mutter (21) antreibt.

8. Spritzgießmaschine nach Anspruch 1, dadurch gekennzeichnet, daß der elektromechanische Spindelantrieb auch an einer fünften Baugruppe (E) zur Betätigung einer Verschlußnadel (17) für die Düse (15) der Spritzgießeinheit vorgesehen ist.

9. Spritzgießmaschine nach Anspruch 8, dadurch gekennzeichnet, daß die Planeten-Wälz-Gewindespindel der fünften Baugruppe (E) über ihre Spindel (33) mit dem Betätigungsgestänge (34) der Verschlußnadel (17) für die Düse (15) verbunden ist und mit der Plastifiziereinheit (14) eine vom Trägerblock (35) abnehmbare bauliche Einheit bildet.

## Claims

1. Injection moulding machine for processing plasticisable substances,
having a mould closing unit (F) provided with a stationary mould carrier (10) and a movable mould carrier (11), which carriers form therebetween a mould clamping chamber (R) for the accommodation of a tool (M), which has a mould cavity (13),
as well as having an injection moulding unit (S), which includes a conveying means (12) for conveying the plasticisable material into the mould cavity (13) of the tool (M) and a plasticising unit (14),
- at least one first assembly (A), which is configured as a closing unit and, in the moulding closing unit, moves the movable mould carrier (11) towards and away from the stationary mould carrier (10), as well as said assembly applying the mould closing force,
- at least one second assembly (B), which is configured as a drive unit and via which the nozzle (15) of the injection moulding unit (S) is mountable on the tool (M), and
- at least one third assembly (C), which is configured as an injection unit and moves the conveying means (12) relative to the plasticising unit (14) for the injection movement,
and having
at least one of these assemblies having an electromechanical spindle drive, spindle (20) and nut (21) being part of a threaded rolling planetary spindle (P1,P2,P3,P4,P5) which is prevented from passively rotating-back via securing means, characterised in that, as the securing means, at least the rotatable part of nut (21) and spindle (20) of the threaded rolling planetary spindle is mounted so as to be displaceable in the longitudinal direction of the spindle (20) in opposition to the force of a resilient restoring means (29,30), and in that blocking means are provided which secure the parts of the threaded rolling planetary spindle in a rotation-preventing manner as a consequence of a reaction force, caused by an external force, so as to overcome the force of the restoring means (29,30).

2. Injection moulding machine according to claim 1, characterised in that the electromechanical spindle drive is also provided on a fourth assembly (D), which is configured as an ejector unit and ejects injection moulded parts (16) from the tool (M).

3. Injection moulding machine according to claim 1, characterised in that the nut (21) of the threaded rolling planetary spindle is rotatably mounted in bearings which are displaceable on a bearing slide (24) in the longitudinal direction of the spindle (20) in opposition to the force of the resilient restoring means (29,30), and in that a retaining disc (25,26,27) is connected to the nut (21) and abuts against a braking surface (43a) when the external force appears.

4. Injection moulding machine according to claim 3, characterised in that the retaining disc (25,26) has a profiling (25a,26a) which engages in the thread (20a) of the spindle (20).

5. Injection moulding machine according to claim 3, characterised in that the retaining disc (25,26) is mounted so as to be displaceable in the longitudinal direction of the spindle (20) in opposition to the force of an additional resilient restoring means (31,32).

6. Injection moulding machine according to claim 1, characterised in that a hollow shaft motor (18) drives the nut (21) of the threaded rolling planetary spindle, the spindle (20) extending into the hollow shaft motor (18) when actuated.

7. Injection moulding machine according to claim 6, characterised in that an additional planetary gear (19) is incorporated in the hollow shaft motor (18), which gear drives the nut (21) on the driven side.

8. Injection moulding machine according to claim 1, characterised in that the electromechanical spindle drive is also provided on a fifth assembly (E) in order to actuate a closing needle (17) for the nozzle (15) of the injection moulding unit.

9. Injection moulding machine according to claim 8, characterised in that the threaded rolling planetary spindle of the fifth assembly (E) is connected to the actuating rod (34) of the closing needle (17) for the nozzle (15) via its spindle (33) and forms, with the plasticising unit (14), a structural unit which is removable from the carrier block (35).

## Revendications

1. Presse d'injection pour la transformation de matières plastifiables, comportant un bloc de fermeture de moule (F) comprenant une plaque porte-moule fixe (10) et une plaque porte-moule mobile (11) qui forment entre elles un espace de serrage de moule (R) destiné à recevoir un moule (M) qui présente une cavité (13),
ainsi qu'un bloc de moulage par injection (S) qui comprend un moyen d'alimentation (12) pour l'envoi de la matière plastifiable dans la cavité (13) du moule (M) et un bloc de plastification (14), et
- au moins un premier groupe (A) constitué d'un bloc de fermeture, qui, dans le bloc de fermeture de moule, approche et éloigne la plaque porte-moule mobile (11) de la plaque porte-moule fixe (10) et applique la force de fermeture du moule,
- au moins un deuxième groupe (B) constitué d'un bloc d'entraînement, par lequel la buse (15) du bloc de moulage par injection (S) peut être appliquée sur le moule (M),
- au moins un troisième groupe (C) constitué d'un bloc d'injection, qui, pour le mouvement d'injection, déplace le moyen d'alimentation (12) par rapport au bloc de plastification (14),
au moins un de ces groupes présentant un dispositif d'entraînement électromécanique à vis, la vis (20) et l'écrou (21) faisant partie d'une tige filetée roulante à satellites (P1, P2, P3, P4, P5) dont la rotation passive en arrière est empêchée par des moyens d'arrêt,
caractérisée par le fait que comme moyens d'arrêt, au moins la partie tournante de l'écrou (21) et de la vis (20) de la tige filetée roulante à satellites est montée mobile dans la direction longitudinale de la vis (20) contre la force d'un moyen élastique de rappel (29, 30), et qu'il est prévu des moyens de blocage qui fixent de manière à les empêcher de tourner les parties de la tige filetée roulante à satellites en raison d'une réaction produite par une force extérieure avec dépassement de la force des moyens de rappel (29, 30).

2. Presse d'injection selon la revendication 1, caractérisée par le fait que le dispositif d'entraînement électromécanique à vis est aussi prévu sur un quatrième groupe (D) constitué d'un bloc d'éjection qui éjecte les pièces injectées (16) du moule (M).

3. Presse d'injection selon la revendication 1, caractérisée par le fait que l'écrou (20) de la tige filetée roulante à satellites est monté tournant dans des roulements qui sont mobiles sur un chariot palier (24) dans la direction longitudinale de la vis (20) contre la force du moyen élastique de rappel (29, 30), et qu'à l'écrou (21) est lié un disque d'arrêt (25, 26, 27) qui, à l'apparition de la force extérieure, vient s'appuyer sur une surface de freinage (43a).

4. Presse d'injection selon la revendication 3, caractérisée par le fait que le disque d'arrêt (25, 26) présente un profilage (25a, 26a) qui s'engage dans le filetage (20a) de la vis (20).

5. Presse d'injection selon la revendication 3, caractérisée par le fait que le disque d'arrêt (25, 26) est monté mobile dans la direction longitudinale de la vis (20) contre la force d'un autre moyen élastique de rappel (31, 32).

6. Presse d'injection selon la revendication 1, caractérisée par le fait qu'un moteur à arbre creux (18) entraîne l'écrou (21) de la tige filetée roulante à satellites, et en cas d'actionnement, la vis (20) s'enfonce dans le moteur à arbre creux (18).

7. Presse d'injection selon la revendication 6, caractérisée par le fait qu'un autre train planétaire (19) est intégré au moteur à arbre creux (18) et entraîne du côté sortie l'écrou (21).

8. Presse d'injection selon la revendication 1, caractérisée par le fait que le dispositif d'entraînement électromécanique à vis est aussi prévu sur un cinquième groupe (E) pour la manoeuvre d'une aiguille d'obturation (17) pour la buse (15) du bloc de moulage par injection.

9. Presse d'injection selon la revendication 8, caractérisée par le fait que la tige filetée roulante à satellites du cinquième groupe (E) est reliée par sa vis (33) à la tringlerie de manoeuvre (34) de l'aiguille (17) qui obture la buse (15), et forme avec le bloc de plastification (14) un seul bloc qui peut être enlevé du bloc support (35).
